# EUROPEAN PATENT APPLICATION

(11) **EP 4 756 935 A1**
(43) Date of publication of application: **10.06.2026**
(21) Application number: 24307039.8
(22) Date of filing: 05.12.2024
(51) Int. Cl.: H01M 4/88, C25B 1/04, C25B 11/04, H01M 4/92

(54) **POLYPHENOL-BASED CARBON WITH ULTRA-LOW METAL CONTENT AS ELECTROCATALYST AND ITS USE FOR ELECTROCHEMICAL WATER SPLITTING**

(71) Applicant: Centre National de la Recherche Scientifique, 75016 Paris (FR); Université de Lorraine, 54000 Nancy (FR); Universidad de Oviedo, 33003 Oviedo (ES)
(72) Inventor: FIERRO PASTOR, Maria Vanessa, 88000 Epinal (FR); CELZARD, Alain, 88000 Epinal (FR); GARCIA DALI, Sergio, Seville (ES); QUILEZ BERMEJO, Javier, 5400 Baden (CH)
(74) Representative: Bandpay & Greuter

(57) **Abstract**

The invention relates to a method for preparing an electrocatalyst comprising a first step of mixing and milling of a metal salt, a polyphenol and a surfactant followed by a second step of heating the paste resulting from the first step at a temperature higher than or equal to 700°C under an N₂ atmosphere.

## Description

### Technical Field

The present invention relates to a method for preparing an electrocatalyst with an ultra-low metal content. The invention also relates to a carbon-metal composite based electrocatalyst as well as to the use of an electrocatalyst in an electrode for electrochemical water splitting.

### Background of the invention

France aims for carbon neutrality in 2050 (Law N°2019-1147 of 8 November 2019 relative to energy and climate). Among the objectives set by government, there is a focus on development of H₂ solution as decarbonated clean energy vector for the future energy mix (both at a storage and transport solution).

One of the main limitations of the hydrogen economy is the current large-scale hydrogen production, which is still obtained primarily from fossil fuels and coals. Indeed, 90% of hydrogen is produced by catalytic reforming of methane.

Electrochemical water splitting is emerging as an attractive alternative to produce H₂ gas on an industrial scale, as it occurs through the hydrogen evolution reaction (HER) in the cathode electrode while the oxygen evolution reaction (OER) takes place in the anode electrode. These reactions, by themselves, cause no greenhouse gas emissions and do not generate toxic byproducts. Thus, these electrochemical reactions are environmentally-friendly method while being efficient for hydrogen production, making it a promising technology for the future.

However, the electrode, specifically the cathode used for HER, is typically loaded with high amount of platinum, making it economically unsustainable for global adoption. Reducing the metal content in electrodes for electrochemical water splitting application is critical for achieving affordable costs and, therefore, ensuring the development of this technology.

There is a need to decrease the high cost of the commercial Pt/C electrode. These efforts have included reducing, replacing, or alloying Pt, as well as modifying the carbon support. A well-suited carbon support can substantially enhance the catalytic performance by optimizing the carbon-platinum interface and the electronic and structural features of platinum atoms.

Document US20100035775 relates to a micro-wave assisted method of synthesizing carbon-metal composites from carbon containing precursors such as lignins, tannins, lignosulfonates, tanninsulfonates and their derivatives.

Document CN116706092 refers to a cheap biomass carbon electrode material using plant tannin-modified chitosan with rare earth active ingredients involving a thermal decomposition.

The article Green and easy synthesis of P-doped carbon-based hydrogen evolution reaction electrocatalysts of Garcia-Dali et al. in Carbon 212:118154 (2023) mentions phosphorus-doped carbon catalysts prepared through phytic acid carbonization at high temperature.

The article Molecular design of heterogeneous electrocatalysts using tannic acid derived metal phenolic networks of Kim et al. in Nanoscale 13:20374 (2021) indicates how to generate metal phenolic network thin films from metal ions of various sizes, groups and periods, as well as tannic acid as carbon precursor.

However, these documents do not show a decrease in the mass percentage of the metal in the electrocatalyst. Furthermore, these documents do not indicate any improvement in the dispersion of the metal at nanometric scale in the carbonaceous matrix.

There is still a need to provide efficient electrocatalysts, especially for electrochemical water splitting, having low amount of metal and a high metal dispersion, as well as a method for preparing such electrocatalysts that can be more environmentally friendly using bio-based and cost-effective precursors.

### Summary of the invention

The present invention relates to a method for preparing an electrocatalyst comprising the following steps:
1) Mixing and milling of a metal salt, a polyphenol and a surfactant;
2) Heating the paste resulting from step 1) at a temperature higher than or equal to 700°C under N₂ atmosphere.

Preferably, the duration of step 1) is from 15 to 90 minutes and more preferably from 45 to 75 minutes.

Preferably, the temperature of step 2) is from 700 to 1200°C, more preferably from 850 to 1100 °C.

Preferably, the weight ratio Polyphenol:Surfactant is from 1:10 to 10:1, preferably from 1:5 to 5:1 and more preferably from 1:3 to 3:1.

Preferably, the metal of the metal salt is chosen in the group consisting of the transition metals, the post-transition metals and/or the lanthanides.

Preferably the metal salt comprises a metal chosen in the group consisting of V, Cr, Mn, Fe, Co, Ni, Cu, Zn, Ru, Pt, Pd, Ce, Ir, Eu, Gd, Tb or a combination thereof, preferably Pd, Pt, Ir or Ru, and more preferably Pt.

Preferably, the polyphenol is a tannin or tannin derivative.

Preferably, the surfactant is chosen from non-ionic copolymer surfactants.

The present invention also relates to a carbon-metal composite based electrocatalyst comprising:
1) 96 to 99.9 % by weight of a carbonaceous matrix.
2) 0.1 to 4 % by weight of metallic single atoms and/or nanoparticles with a size under 10 nm, preferably under 5 nm, even more preferably under 2 nm.

Preferably, the amount of metallic single atom and/or nanoparticles in the electrocatalyst is comprised between 0.5 and 3 % by weight and preferably from 1 to 2 % by weight.

Preferably, the metal of the metallic single atom and/or nanoparticles in the electrocatalyst is chosen in the group consisting of the transition metals, the post-transition metals and/or the lanthanides.

Preferably, the metal of the metallic single atom and/or nanoparticles in the electrocatalyst is chosen in the group consisting of V, Cr, Mn, Fe, Co, Ni, Cu, Zn, Ru, Pt, Pd, Ir, Ce, Eu, Gd, Tb or a combination thereof, preferably Pd, Pt, Ru or Ir and more preferably Pt.

Preferably, the carbonaceous matrix of the electrocatalyst derives from polyphenol and surfactant.

Preferably, the electrocatalyst is susceptible to be obtained by the method described above.

The present invention also relates to the use of the electrocatalyst in an electrode for electrochemical water splitting, preferably for hydrogen evolution reaction (HER), oxygen evolution reaction (OER), CO₂ reduction reaction (CO₂RR) or N₂ reduction reaction (N₂RR).

In one embodiment, the electrocatalyst is used as a cathode for the hydrogen evolution reaction (HER), preferably in acidic media.

### Figures

**Figure 1** is an image obtained by Transmission Electron Microscopy of T-Pt-25-P0 with a scale bar of 10nm.
**Figure 2** is an image obtained by Transmission Electron Microscopy of T-Pt-25 with a scale bar of 10nm.

### Detailed description

The invention is now described in more detail and in a non-limiting manner in the following description.

The following terms and expressions contained herein are defined as follows.

As used herein, the term "electrocatalyst" means a catalyst that participates in electrochemical reactions.

As used herein, the term "transition metal" means a chemical element in the d-block of the periodic table including scandium, titanium, vanadium, chromium, manganese, cobalt, nickel, copper, yttrium, zirconium, niobium, molybdenum, technetium, ruthenium rhodium, palladium, silver, lutetium, hafnium, tantalum, tungsten, rhenium, osmium, iridium, platinum, gold, lawrencium, rutherfordium, dubnium, seaborgium, bohrium, hassium, meitnerium, darmstadtium, roentgenium.

As used herein, the term "post-transition metal" refers to a chemical element sitting between the transition metals and the metalloids in the periodic table including aluminum, gallium, indium, tin, thallium, lead and bismuth.

As used herein, the term "lanthanide" corresponds to a chemical element with atomic numbers from 58 to 71 in which the 4f sublevel is being filled.

As used herein, the term "surfactant" means a chemical compound exhibiting a structure with two different functional groups (generally a hydrophobic and a hydrophilic groups) with different affinity within the same molecule. Surfactants create self-assembled molecular clusters, referred as micelles, in both a solution and a different phase (gas, solid). Surfactants are classified into ionic and non-ionic surfactants.

As used herein, the term "polyphenol" refers to a molecule comprising at least one hydroxyl group on aromatics rings. Polyphenols can be classified into phenolic acids (e.g. derivatives of cinnamic acids and benzoic acid), flavonoids (e.g. flavonols, flavanones, flavones, flavanols, isoflavones, and anthocyanins), lignans and stilbenes. As used herein, the term "nanoparticle" refers to a nano-object with a mean particle diameter in the range from 0.1 to 100 nm.

All other terms used in the description of the present invention have their meanings as is well known in the art.

### Method for preparing an electrocatalyst

A first aspect of the present invention relates to a method for preparing an electrocatalyst comprising the following steps:

### 1) Mixing and milling of a metal salt, a polyphenol and a surfactant;

Heating the paste resulting from step 1) at a temperature higher than or equal to 700°C under N₂ atmosphere.

The electrocatalyst may be a hydrogen evolution reaction (HER) electrocatalyst, an oxygen evolution reaction (OER) electrocatalyst, a CO₂ reduction reaction (CO₂RR) electrocatalyst or a N₂ reduction reaction (N₂RR) HER electrocatalyst, and preferably an HER electrocatalyst.

The mixing and milling described in step 1) may be performed at a speed from 200 to 1000 revolutions per minute, preferably from 400 to 800 revolutions per minute.

A solvent may be added in step 1), preferably water. Preferably, when a solvent is used, the amount of solvent added is comprised between 20 and 80 wt%, preferably between 30 and 70 wt%, and even more preferably between 35 and 65 wt%, based on the total amount of metal salt, surfactant, polyphenol and water.

The duration of step 1) may be from 15 to 90 minutes, preferably from 45 to 75 minutes.

Mixing and milling of step 1) may be carried out by mechanochemical methods, preferably by a ball-milling method.

Step 1) preferably comprises an amount of metal salt from 0.1 to 5% by weight, preferably from 0.2 to 3% by weight, even more preferably from 0.3 to 2% by weight, based on the total amount of metal salt, surfactant and polyphenol. Step 1) preferably comprises an amount of surfactant from 30 to 90% by weight, preferably from 40 to 85% by weight, even more preferably from 45 to 75% by weight, based on the total amount of metal salt, surfactant and polyphenol.

Step 1) preferably comprises an amount of polyphenol from 10 to 50% by weight, preferably from 15 to 45% by weight, even more preferably from 20 to 40% by weight, based on the total amount of metal salt, surfactant and polyphenol.

The weight ratio polyphenol:surfactant is preferably from 1:10 to 10:1, preferably from 1:5 to 5:1 and more preferably from 1:3 to 3:1, even more preferably from 1:1 to 1:5, still more preferably from 1:1 to 1:3.

The weight ratio polyphenol:metal salt is preferably from 100:1 to 10:1, more preferably from 100:1 to 30:1, even more preferably from 50:1 to 40:1.

The weight ratio surfactant:metal salt is preferably from 300:1 to 10:1, more preferably from 200:1 to 30:1, even more preferably from 100:1 to 40:1.

The metal of the metal salt may be chosen in the group consisting of the transition metals, the post-transition metals and/or the lanthanides.

The metal salt may comprise a metal chosen in the group consisting of V, Cr, Mn, Fe, Co, Ni, Cu, Zn, Ru, Pt, Pd, Ce, Ir, Eu, Gd, Tb or a combination thereof, preferably Pd, Pt, Ir or Ru, and even more preferably Pt.

Preferably, the metal salt is a Pt salt, preferably potassium hexachloroplatinate, platinum chloride, platinum nitrate, and more preferably potassium hexachloroplatinate.

The polyphenol is preferably a tannin, tannin derivatives, a flavonoid, a stilbene or a lignan, and more preferably tannin or tannin derivatives.

The inventors have shown that the addition of polyphenol as carbon precursor and acts as a complexing agent for the metal ions.

Preferably, the tannin is chosen in the group consisting of condensed tannins, gallotannins, ellagitannins, proanthocyanidins, preferably condensed tannins.

Preferably, the tannin derivatives are chosen in the group consisting of gallic acid, ellagic acid, caffeic acid, ferulic acid and tannic acid, preferably tannic acid.

The surfactant may be ionic or nonionic.

The inventors have shown that the addition of surfactant helps to avoid aggregation of the metal ions resulting in an electrocatalyst with improved dispersion of the metal in the carbon matrix as nanoparticles or single atoms.

The surfactant is preferably chosen from sorbitan esters, polysorbates, polyoxyalkylene alkyl ethers, polyoxyalkylene or copolyoxyalkylene, preferably from polyoxyalkylene or copolyoxyalkylene.

The sorbitan esters may be chosen from sorbitan monolaurate, sorbitan monopalmitate, sorbitan monostearate.

The polysorbates may be chosen from polyoxyethylenesorbitan monolaurate, polyoxyethylenesorbitan monopalmitate, polyoxyethylenesorbitan monostearate, polyoxyethylene (20) sorbitan monooleate.

The polyoxyalkylene ether may be chosen from polyoxyethylene (4) lauryl ether, polyoxyethylene lauryl ether, polyoxyethylene (10) cetyl ether, polyoxythylene (20) cetyl ether.

The surfactant is preferably a non-ionic surfactant, preferably chosen from copolyoxyalkylene.

The copolyoxyalkylene may be chosen from polyoxyethylene-polyoxypropylene-polyoxyethylene block copolymer and preferably having the following formula (I) : 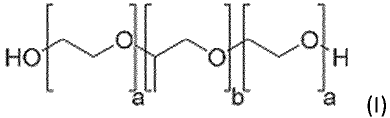 wherein a is from 5 to 500 and b is from 5 to 200, preferably a is from 10 to 200 and b is from 20 to 150, even more preferably a is from 50 to 150 and b is from 40 to 100, still more preferably a is from 75 to 125 and b is from 50 to 75.

Preferably, the copolyoxyalkylene is a polyoxethylene-polyoxypropylene-polyoxyethylene having the formula (I), wherein a is 100 and b is 65.

The mass average molar mass (Mw) of the surfactant according to the invention is preferably comprised between 1,000 and 100,000 g mol⁻¹, preferably between 2,000 and 50,000 g mol⁻¹, even more preferably between 5,000 and 20,000 g mol⁻¹.

The temperature of step 2) may be from 700 to 1200°C, preferably from 850 to 1100 °C, even more preferably from 850 to 950°C.

The duration of step 2) may be from 10 to 120 minutes, preferably from 30 to 90 minutes, even more preferably from 55 to 65 minutes.

The heating step 2) may be carried out under an inert gas flow (nitrogen).

The flow of nitrogen in step 2) is preferably from 25 to 500 mL min⁻¹, preferably from 50 to 250 mL min⁻¹, even more preferably from 75 to 200 mL min⁻¹.

The resulting paste after heat treatment of step 2) may be treated by an acidic media, preferably by chlorohydric acid.

This acid washing method advantageously removes platinum particles that have not been anchored into the final carbon structure.

The acid washing method can be carried out in an ultrasonic bath.

In a preferred embodiment, the invention relates to a method for preparing an electrocatalyst comprising the following steps:
1) Mixing and milling of a Pt, Pd, Ru or Ir salt, tannin or tannin derivatives and a surfactant;
2) Heating the paste resulting from step 1) at a temperature higher than or equal to 700°C under an N₂ atmosphere.

In a preferred embodiment, the invention relates to a method for preparing an electrocatalyst comprising the following steps:
1) Mixing and milling of a Pt, Pd, Ru or Ir salt, tannin or tannin derivative and a surfactant by ball-milling;
2) Heating the paste resulting from step 1) at a temperature higher than or equal to 700°C under an N₂ atmosphere.

In a preferred embodiment, the invention relates to a method for preparing an electrocatalyst comprising the following steps:
1) Mixing and milling of a Pt salt, tannin or tannin derivative and a copolyoxyalkylene by ball-milling;
2) Heating the paste resulting from step 1) at a temperature higher than or equal to 700°C under an N₂ atmosphere.

The present invention also relates to an electrocatalyst obtained by the method according to the invention.

### Carbon-metal composite based electrocatalyst

A second aspect of the present invention relates to a carbon-metal composite-based electrocatalyst comprising:
1) 96 to 99.9 % by weight of a carbonaceous matrix
2) 0.1 to 4 % by weight of metallic single atoms and/or metallic nanoparticles with a mean particle diameter under 10 nm, preferably between 0.05 to 10 nm, preferably under 5 nm, preferably between 0.1 and 5 nm even more preferably under 2 nm.

The amount of metal in the carbonaceous matrix may be determined by Inductively Coupled Plasma - Optical Emission Spectroscopy (ICP-OES), X-Ray Photoelectron Spectroscopy (XPS) or Thermo-Gravimetric Analysis (TGA). These methods are for example described in the book of : A. K. Tyagi, M. Roy, S. K.. Kulshreshtha, S. Banerjee, Advanced techniques for materials characterization, 2009.

The amount of metallic single atom and/or nanoparticles in the electrocatalyst may be comprised between 0.5 and 3 % by weight and preferably from 1 to 2 % by weight.

The average particle diameter of the nanoparticles may be determined by Transmission Electronic Microscopy (TEM) or chemical adsorption. These methods are for example described in the book of : A. K. Tyagi, M. Roy, S. K.. Kulshreshtha, S. Banerjee, Advanced techniques for materials characterization, 2009.

The metal of the metallic single atom and/or metallic nanoparticles is as defined above in the description of the method. The metallic single atoms and/or metallic nanoparticles may have a mean particle diameter from 10 to 0.01 nm, preferably from 5 to 0.01 nm and even more preferably from 2 to 0.01 nm.

The metal of the metallic single atom and/or nanoparticles in the electrocatalyst is preferably Pd, Pt, Ru or Ir and even more preferably Pt.

The carbonaceous matrix of the electrocatalyst is as defined above for the description of the method.

According to a preferred embodiment, the electrocatalyst may be a carbon-metal composite based electrocatalyst comprising:
1) 98 to 99% by weight of a carbonaceous matrix
2) 1 to 2 % by weight of metallic single atoms and/or metal nanoparticles with a mean particle diameter under 10 nm, preferably under 5 nm, even more preferably under 2 nm.

The electrocatalyst may be susceptible to be obtained by the method according to the invention.

According to a preferred embodiment, the electrocatalyst may be obtained by a method comprising the following steps:
1) Mixing and milling of a Pt, Pd, Ru or Ir salt, tannin or derivative tannin and a surfactant;
2) Heating the paste resulting from step 1) at a temperature higher than or equal to 700°C under an N₂ atmosphere.

### Use of the electrocatalyst

A third aspect of the present invention relates to the use of the electrocatalyst in an electrode for electrochemical water splitting, preferably for hydrogen evolution reaction (HER), oxygen evolution reaction (OER), CO₂ reduction reaction (CO₂RR) or N₂ reduction reaction (N₂RR), even more preferably for hydrogen evolution reaction (HER).

The electrocatalyst may be used as a cathode for hydrogen evolution reaction (HER), preferably in acidic media.

The acidic media may be chosen from sulfuric acid, perchloric acid, hydrochloric acid or nitric acid. Preferably sulfuric acid.

In an other embodiment, the electrocatalyst is used as an electrode for electrochemical water splitting, preferably for hydrogen evolution reaction (HER), oxygen evolution reaction (OER), CO₂ reduction reaction (CO₂RR) or N₂ reduction reaction (N₂RR), even more preferably for hydrogen evolution reaction (HER).

The following examples illustrate the invention.

### Examples

### General synthetic conditions

First, 1 g of Tannin (1401-55-4), 2 g of Pluronic^{®} F-127 (9003-11-6), 25 mg of potassium hexachloroplatinate (16921-30-5) and 2 g of water were mixed at 500 rpm for 1 h in an agate bowl (50 ml) with 10 agate balls (1 cm diameter), in a planetary ball-milling machine (PM100, Retsch). During the mechanosynthesis process (mixing and milling process), the successful interaction between Pt and C precursor was carried out. After the mechanosynthesis process, a red-brown paste was recovered and thermally treated at 900 °C with a heating rate of 5 °C/min under an N₂ flow of 150 mL/min. Prior to the heat treatment, the furnace was purged at room temperature for 1 h under the same N₂ flow. The heat treatment produces the carbonization of the sample, resulting in the formation of a carbonaceous matrix with Pt nanoparticles and Pt single atoms anchored along the carbonaceous matrix. Then, the obtained carbon was sonicated in HCl (C = 1M) using an ultrasonic bath for 1 h at 50°C, and then washed by filtering with a volume of 0.5 L of HCl (C = 1M) and a volume of 0.5 L of distilled water, in order to remove the excess of Pt is still remained in the sample. After that, the material was dried at 100°C overnight in an oven.

Several variables involved during the synthesis process were studied such as the amount of Pt precursor, the amount of Pluronic F-127, the temperature treatment and the mixing time during the mechanosynthesis process. The variables of the different samples are given in Table 1.

**[Table 1]**

| **Sample** | Amount of Pt precursor (mg) | Amount of Pluronic F127 (g) | Ratio polyphenol : surfactant | Temperature treatment (°C) | Mixing time (min) |
|---|---|---|---|---|---|
| E1 (T-Pt 10) Invention | 10 | 2 | 1:2 | 900 | 60 |
| E2 (T-Pt 25) Invention | 25 | 2 | 1:2 | 900 | 60 |
| E3 (T-Pt 50) Invention | 50 | 2 | 1:2 | 900 | 60 |
| E4 (T-Pt 75) Invention | 75 | 2 | 1:2 | 900 | 60 |
| E5 (T-Pt 25 800) Invention | 25 | 2 | 1:2 | 800 | 60 |
| E6 (T-Pt 25 P1) Invention | 25 | 1 | 1:2 | 900 | 60 |
| E7 (T-Pt 25 P3) Invention | 25 | 3 | 1:3 | 900 | 60 |
| CE1 (T-Pt 25 P0) Comparative | 25 | 0 | 1:0 | 900 | 60 |
| CE2 (Pt/C) Comparative | Commercial product (20% Pt on Vulcan XC72, 20% Pt/Vulcan) | | | | |

### Platinum content of the different electrocatalysts

The platinum content of the formulations was determined by Inductively Coupled Plasma - Optical Emission Spectroscopy (ICP-OES). The results are given in Table 2.

As shown in Table 2, Pt content in all samples is much lower than the commercial one (20 wt%), oscillating between 0.6 and 3.4wt%. Not significative changes have been observed when the amount of Pluronic F-127 was modified. However, when Pluronic F-127 is absent the electrocatalyst obtained has a higher Pt content. The higher the temperature treatment, the lower the amount of Pt content is in the electrocatalyst. A lower mixing time produces a higher Pt content.

**[Table 2]**

| **Sample** | Pt (wt%) | Standard deviation |
|---|---|---|
| E1 (T-Pt 10) | 0.6 | 0.1 |
| E2 (T-Pt 25) | 1.4 | 0.1 |
| E3 (T-Pt 50) | 3.4 | 0.2 |
| E4 (T-Pt 75) | 3.1 | 0.4 |
| E5 (T-Pt 25 800) | 2.5 | 0.9 |
| E6 (T-Pt 25 P1) | 2.7 | 0.1 |
| E7 (T-Pt 25 P3) | 1.3 | 0.1 |
| CE1 (T-Pt 25 P0) | 2.8 | 0.2 |
| CE2 (Pt/C) | 20* | - |

| | | |
|---|---|---|
| *value given by the provider | | |

### Analysis of Pt dispersion

E2 and CE1 (surfactant-free) samples were characterized using TEM.

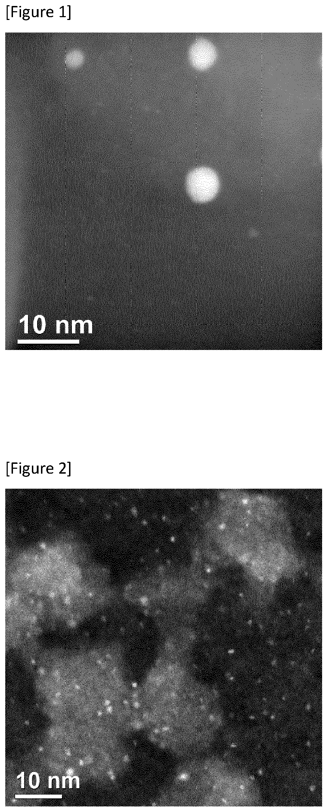

In both samples, Pt single atoms and nanoparticles are observed (Figure 1 and 2) but larger Pt nanoparticles in greater numbers are identified in CE1 compared to E2. It demonstrates that the presence of surfactant (Pluronic F-127) helps to increase Pt dispersibility and to decrease the Pt particle size.

### Electrocatalytic activity

Linear sweep voltammetries (LSVs) were performed in an N₂-saturated 0.5 M H₂SO₄ solution at 1600 rpm to evaluate the electrocatalytic activity towards electrochemical water splitting and more specifically towards the HER of all as-prepared samples (E1 to E7, CE1 and CE2). These methods are described in the article of : L. Bouleau, S. Pérez-Rodriguez, J. Quilez-Bermejo, M. T. Izquierdo, F. Xu, V. Fierro, A. Celzard, Best practices for ORR performance evaluation of metal-free porous carbon electrocatalysts, Carbon, 189, 349-361, 2022.

The potential at which a current density of -10 mA cm² is achieved, known as E_{HER}, is commonly used as an indicator of the electrocatalytic activity for the HER. A more positive E_{HER} corresponds to higher electrocatalytic activity for the HER. Table 3 shows that E2 (T-Pt 25) sample exhibits the highest electrocatalytic activity towards HER, reaching an E_{HER} (potential reached at -10 mA cm⁻²) of -0.014 V vs RHE. Under the same conditions, CE1 (T-Pt-25 P0) and CE2 (commercial Pt/C) exhibit an E_{HER} of - 0.100 and -0.040 V vs RHE, respectively.

Furthermore, taking into account the lower Pt content present in E2 (1.4 wt%) compared with the commercial electrocatalyst CE2 (20 wt%), the mass activity (A mg_{Pt}⁻¹) of Pt (named "I") of T-Pt-25 exhibits a higher 30 times superior Pt mass activity than the Pt/C commercial electrocatalysts.

**[Table 3]**

| **Sample** | Pt (wt%) | Support | Pt precursor | E_{HER} (mV vs RHE) |
|---|---|---|---|---|
| E1 (T-Pt 10) | 0.6 | Tannin | Hexachloropla tinate | -62 |
| E2 (T-Pt 25) | 1.4 | Tannin | Hexachloropla tinate | -10 |
| E3 (T-Pt 50) | 3.4 | Tannin | Hexachloropla tinate | -63 |
| E4 (T-Pt 75) | 3.1 | Tannin | Hexachloropla tinate | -22 |
| E5 (T-Pt 25 800) | 2.5 | Tannin | Hexachloropla tinate | -32 |
| E7 (T-Pt 25 P1) | 2.7 | Tannin | Hexachloropla tinate | -87 |
| E8 (T-Pt 25 P3) | 1.3 | Tannin | Hexachloropla tinate | -39 |
| CE1 (T-Pt 25 P0) | 2.8 | Tannin | Hexachloropla tinate | -100 |
| CE2 (Pt/C) | 20 | Vulcan XC72 | - | -40 |

| | | | | |
|---|---|---|---|---|
| Mecanosynthetis = mixing and milling | | | | |

## Claims

1. A method to prepare an electrocatalyst comprising the following steps:
1) Mixing and milling of a metal salt, a polyphenol and a surfactant;
2) Heating the paste resulting from step 1) at a temperature higher than or equal to 700°C under an N₂ atmosphere.

2. A method according to claim 1 wherein the duration of step 1) is from 15 to 90 minutes and preferably from 45 to 75 minutes.

3. A method according to claim 1 or 2 wherein the temperature of step 2) is from 700 to 1200°C, more preferably from 850 to 1100 °C.

4. A method according to claim 1 or 3 wherein the weight ratio Polyphenol : Surfactant is from 1:10 to 10:1, preferably from 1:5 to 5:1 and more preferably from 1:3 to 3:1.

5. A method according to any one of claims 1 to 4, wherein the metal of the metal salt is chosen in the group consisting of the transition metals, the post-transition metals and/or the lanthanides.

6. A method according to any one of claims 1 to 5, wherein the metal salt comprises a metal chosen in the group consisting of V, Cr, Mn, Fe, Co, Ni, Ir, Cu, Zn, Ru, Pt, Pd, Ce, Eu, Gd, Tb or a combination thereof, preferably Pd, Pt, Ir or Ru, and more preferably Pt.

7. A method according to any one of claims 1 to 6, wherein the polyphenol is a tannin or tannin derivative.

8. A method according to any one of claims 1 to 7, wherein the surfactant is chosen from non-ionic copolymer surfactants.

9. A carbon-metal composite based electrocatalyst comprising:
1) 96 to 99.9 % by weight of a carbonaceous matrix
2) 0.1 to 4 % by weight of metallic single atoms and/or nanoparticles with a size under 10 nm, preferably under 5 nm, even more preferably under 2 nm.

10. An electrocatalyst according to claim 9, wherein the amount of metallic single atom and/or nanoparticles is comprised between 0.5 and 3 % by weight and preferably from 1 to 2 % by weight.

11. An electrocatalyst according to claim 9 or 10, wherein the metal of the metallic single atom and/or nanoparticles is chosen in the group consisting of the transition metals, the post-transition metals and/or the lanthanides.

12. An electrocatalyst according to any one of claims 9 to 11, wherein the metal of the metallic single atom and/or nanoparticles is chosen in the group consisting of V, Cr, Mn, Fe, Co, Ni, Cu, Zn, Ru, Pt, Pd, Ir, Ce, Eu, Gd, Tb or a combination thereof, preferably Pd, Pt, Ru or Ir and more preferably Pt.

13. An electrocatalyst according to any one of claims 9 to 12, wherein the carbonaceous matrix derives from polyphenol and surfactant.

14. An electrocatalyst according to any one of claims 9 to 13 susceptible to be obtained by a method according to any one of claims 1 to 7.

15. Use of an electrocatalyst according to any one of claims 1 to 14 in an electrode for electrochemical water splitting, preferably for hydrogen evolution reaction (HER), oxygen evolution reaction (OER), CO₂ reduction reaction (CO₂RR) or N₂ reduction reaction (N₂RR).

16. Use of an electrocatalyst according to any one of claims 1 to 14 as a cathode for hydrogen evolution reaction (HER), preferably in acidic media.
